(19) Europäisches Patentamt

European Patent Office

Office européen des brevets

(11) **EP 2 491 716 B1**

(12) **EUROPEAN PATENT SPECIFICATION**

(45) Date of publication and mention
of the grant of the patent:
**29.04.2020 Bulletin 2020/18**

(21) Application number: **10768295.7**

(22) Date of filing: **16.09.2010**

(51) Int Cl.:
**H04N 19/176** (2014.01)

(86) International application number:
**PCT/JP2010/066621**

(87) International publication number:
**WO 2011/048909 (28.04.2011 Gazette 2011/17)**

(54) **METHOD FOR DECODING A BITSTREAM CREATED BY USING A DIRECTIONAL TRANSFORM**

VERFAHREN FÜR DIE DEKODIERUNG EINES BITSTROMS ERZEUGT DURCH NUTZUNG EINER GERICHTETEN TRANSFORMATION

PROCÉDÉ DE DÉCODAGE D'UN TRAIN DE BITS GÉNÉRÉ PAR L'UTILISATION D'UNE TRANSFORMATION ORIENTÉE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.10.2009 US 603100**

(43) Date of publication of application:
**29.08.2012 Bulletin 2012/35**

(73) Proprietor: **Mitsubishi Electric Corporation Tokyo 100-8310 (JP)**

(72) Inventors:
• **COHEN, Robert, A.**
  **Somerville, Massachusetts 02143 (US)**
• **VETRO, Anthony**
  **Arlington, Massachusetts 02474 (US)**
• **SUN, Huifang**
  **Billerica, Massachusetts 01821 (US)**

(74) Representative: **Pfenning, Meinig & Partner mbB Patent- und Rechtsanwälte Theresienhöhe 11a 80339 München (DE)**

(56) References cited:
• **CHUO-LING CHANG ET AL: "Direction-adaptive partitioned block transform for image coding", IMAGE PROCESSING, 2008. ICIP 2008. 15TH IEEE INTERNATIONAL CONFERENCE, IEEE, PISCATAWAY, NJ, USA, 12 October 2008 (2008-10-12), pages 145-148, XP031373959, DOI: 10.1109/ICIP.2008.4711712 ISBN: 978-1-4244-1765-0**
• **BING ZENG ET AL: "Directional Discrete Cosine Transforms - A New Framework for Image Coding", IEEE TRANSACTIONS ON CIRCUITS AND SYSTEMS FOR VIDEO TECHNOLOGY, IEEE SERVICE CENTER, PISCATAWAY, NJ, US, vol. 18, no. 3, 1 March 2008 (2008-03-01), pages 305-313, XP011204025, ISSN: 1051-8215**

## Description

## Technical Field

The invention relates generally to video codecs, and more particularly to directional transforms used during the encoding and decoding of blocks of pixels in video frames and images.

## Background Art

## Codecs

A digital video codec compresses and decompresses a video. Codecs can be found in broadcast equipment, televisions, personal computers, video recorders and players, satellites, as well as mobile and on-line devices. Codecs partition each frame of the video into blocks of pixels, and process the blocks one at the time.

During encoding, spatial and temporal redundancies are eliminated to reduce the data rate. The invention is particularly concerned with the transforms that are used during encoding and decoding videos. The most common transform is a discrete cosine transform (DCT) as specified in the MPEG and H.264/AVC standards. The DCT converts pixel intensities in the spatial domain to transform coefficients in the frequency domain. The coefficients are then quantized, and entropy encoded to produce a compressed bitstream. The bitstream can be stored on a medium (DVD), or communicated directly to the decoder. During decoding, the steps are inverted. After entropy decoding and inverse quantization, an inverse transformation is applied to recover the original video.

Generally, the number of decoders, e.g., consumer products all over the world, far exceeds the number of encoders. Therefore, to enable interoperability, only the bitstream and the decoding process is standardized. The encoding process is typically not specified at all in a standard.

In the publication CHUO-LING CHANG of AL "Direction-adaptive partitioned block transform for image coding", Image Processing 2008, ICIP 2008, 15th IEEE International Conference, Picataway, NJ, USA, p. 145-148; the direction-adaptive block transform is proposed to improve the compression performance. As a block transform, it can be directly combined with block-wise intra and interprediction in video coding standards.

## Transforms

The DCT includes a horizontal 1-D DCT applied to each row of pixels in the block and a vertical 1-D DCT applied to each column. For blocks with predominantly horizontal or vertical features, the 2-D DCT is efficient. However, the 2-D DCT does not efficiently transform blocks that contain features that are *not* horizontal or vertical, i.e., directional features, where directional refers to orientations other than horizontal and vertical.

Generally, there are two methods that implement directional transforms. The first method applies the 2-D DCTs along predefined paths within the block. The second method applies a directional filter, followed by the 2D DCT. Typically, a fan filter partitions the block into a set of directional sub-bands. Transforms are subsequently applied to each sub-band. Directional transforms such as contourlets are implemented in this way. Contourlets efficiently transform frames containing smooth regions separated by curved boundaries.

Directional transforms have been used to supplement the existing 2-D DCT or DCT-like transform for existing video coding methods, such as H.264/AVC. During the encoding process, the H.264/AVC encoder selects from a set of transforms, such as the conventional 2-D transform, and a set of directional transforms. The single transform that yields the best performance, in a rate/distortion sense, is then selected for the encoding and decoding.

After the transform, improvements can by made in the entropy encoding of the corresponding data by leveraging statistics of the directional data. In the H.264/AVC, a context adaptive binary arithmetic coder (CABAC) or a context adaptive variable length coder (CAVLC) is used to entropy encode different types of data. The input symbols are mapped to binary code words and compressed by an arithmetic coder. Contexts are used to adapt the statistics used by the arithmetic coder. Each context stores the most probable symbol (either 0 or 1), and the corresponding probability.

The H.264/AVC standard is designed to use the 2-D DCT. Existing methods can use directional transforms to extend the performance of H.264/AVC encoders. However, those methods still generate and code the direction-related decisions and data using the conventional H.264/AVC framework. Thus, there is a need to efficiently represent directional information, as well as a need for improving coding efficiencies.

The purpose of the transform is to convert a block of varying pixel values to a block of coefficients for which most of the coefficients are zero. In the case of the DCT, an array set of pixels is converted into a set of DCT coefficients representing low-frequency to high-frequency data in the block. The lowest frequency is the DC coefficient, which relates to the average value of all the pixels converted by the transforms. The next coefficient represents the magnitude of the lowest-frequency cosine wave that is contained in the signal. Subsequent coefficients correspond to increasing frequencies. If the data are well-suited for the DCT, then many of the frequency coefficients are be zero, and are not needed by the decoder to reconstruct the video.

One problem with existing directional transforms, which use a set of parallel 1-D transforms, is that the length of each 1-D transform may vary depending on the position of the transform in the block. For example, to transform an 8x8 block using a directional transform oriented at 45 degrees, the 1-D transform along the main diagonal of the block has eight elements, and the adjacent 1-D has seven elements, and so on to transforms of one or two elements, which are inefficient. A one-element transform is, at best, a scaling of one pixel value, which does little to improve coding efficiency. Thus, there is a need for a method for transforming blocks using these transforms in a way that does not suffer the inefficiencies exhibited by small transform paths, yet still maintain the directional properties of the original transform.

There is also a need for a method to apply a second set of transforms to the output of the first set of transforms in a way that further improves coding efficiency without degrading performance in the way that a 2-D DCT would when the data are uncorrelated in the second orthogonal direction.

Furthermore, there is a need for partitioned versions of this transform that are suited for coding prediction residual blocks that are commonly found in predictive coders such as H.264/AVC.

## Summary of Invention

The problem is solved by the method for decoding a bitstream in accordance with claim 1. In particular, the bitstream includes a sequence of frames. Each frame is partitioned into encoded blocks. For each block, a set of paths is determined at a transform angle determined from a transform index in the bitstream. Transform coefficients are obtained from bitstream. The transform coefficients include one DC coefficient for each path. An inverse transform is applied to the transform coefficients to produce a decoded video.

## Brief Description of Drawings

Figure 1A is a block diagram of a video system;

Figure 1B is a block diagram of a decoder;

Figure 1C is a block diagram of an encoder;

Figure 2 is a block diagram of a sub-block and partition directional processing module;

Figure 3 is a block diagram of a transform type and direction decision module;

Figure 4 is a block diagram of the direction inference module;

Figure 5 is a block diagram of a directional prediction module;

Figure 6 is a block diagram of a directional index encoding module;

Figure 7 is a schematic of a first example of the directional index encoder module;

Figure 8 is a schematic of a second example of the directional index encoder module;

Figures 9-10 are flow diagrams for a context generation module;

Figures 11A-B are schematics of paths for primary and secondary directional transforms;

Figures 12A-F are block diagrams for primary directional transforms for 8x8 blocks of pixels; and

Figure 13 is a block diagram of a set of partitioned directional transforms.

## Description of Examples

### Codec

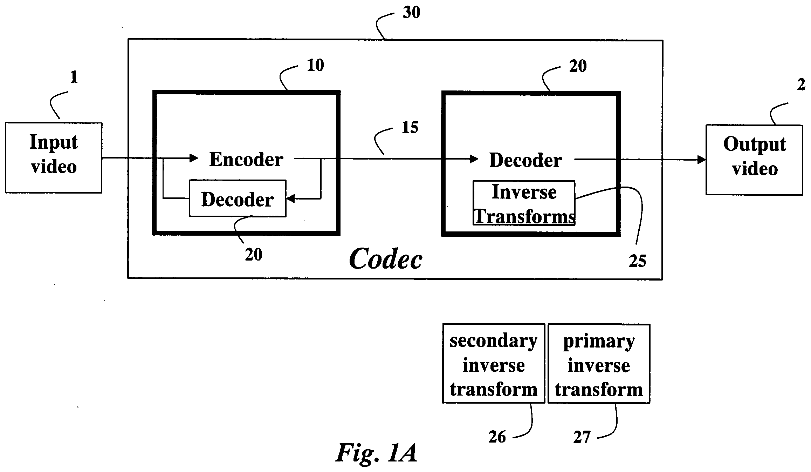

Figure 1A shows a video system. The system includes an encoder 10 and a decoder 20, in combination a *codec* 30. The codec can be implemented in processors including memories and input/output interfaces as known in the art.

The encoder compresses an input video 1 into a bitstream 15. The encoder applies transformation, quantization, and entropy encoding to the input video as described in detail below. To ensure that the output video accurately reflects the input video, the decoder 20 performs the inverse steps in an inverse order. In addition, the encoder typically includes the equivalent of the decoder to provide feedback for the encoding process. Because all encoder variables are readily available in the encoder, the decoder in the encoder is relatively simple. The invention is particularly concerned with the inverse directional transforms 25.

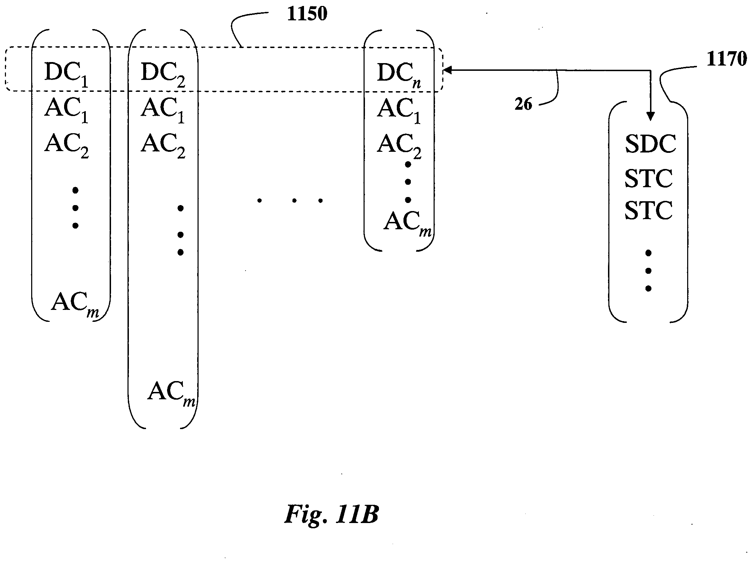

As described below, and shown in Fig. 11B, the transforms can include primary and secondary transforms. During encoding, the primary transform operates on pixel intensities to determine transform coefficients, e.g., DC and AC coefficients. The secondary transform operates only on the DC coefficients 1160 to produce secondary transform coefficients 1170 to further reduce data redundancies. The inverse transforms include a secondary inverse transform 26 to reconstruct the DC coefficients, and the primary inverse transforms 27 recover the pixel intensities for the decoded video.

To ensure interoperability between the encoder and the decoder, video coding standards typically only specify the bitstream and the decoding process. However, it is understood that a description of the encoding process, as detailed below, is sufficient to exactly deduce the inverse decoding process by one of ordinary skill in the art.

## Decoder

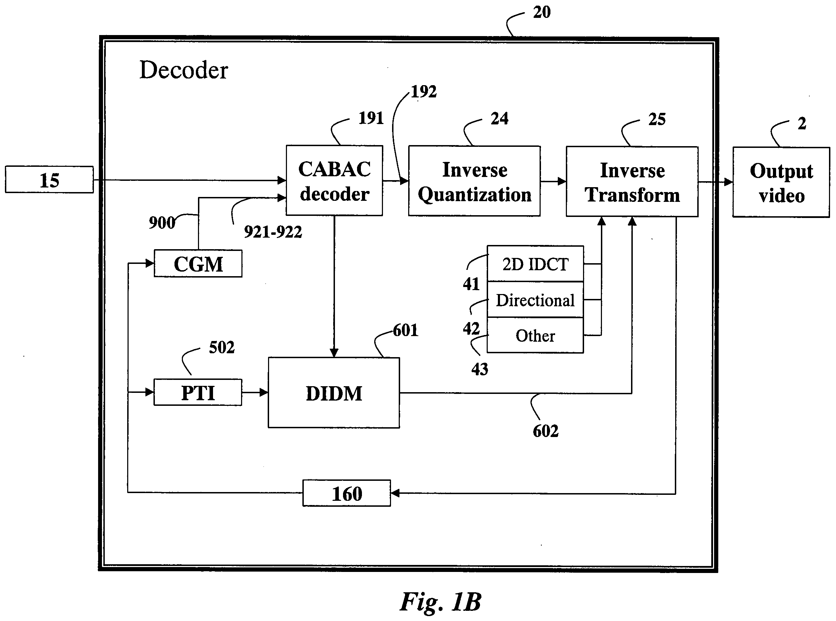

Figure 1B show relevant portions of our decoder 20. The decoder receives the encode bit stream 15, and information 160. The bit stream is presented to a CABAC entropy decoder 191, which produces quantized transform coefficients 192 according to the information. For the first block, the information can be an initial context. Subsequently, the information relates to previously processed (decoded) blocks.

The coefficients are inverse quantized 24 and inverse transformed 25 so that the decoded blocks form the output or decoded video 2. The transform can be an inverse discrete cosine transform (IDCT). The transforms can include a 2D inverse discrete cosine transform, and a set of inverse directional transforms. Secondary inverse transforms can also be applied as described below in greater detail.

The information 160 is presented to the context generation module (CGM) of the decoder, which forwards selected contexts 921-922 to the CABAC decoder. Predicted transform indicators (PTI) 501 of the previously decoded blocks 160 are presented to a directional index decoding module (DIDM) 601, which generates a transform indicator 602 for the inverse transform 25. The inverse transform can use any of the inverse transforms, e.g., 1D horizontal and 1D vertical inverse DCTs (2D IDCT) 41, a set of inverse directional transforms 42, and any other known inverse transforms 43.

It is noted that current video coding standards only use a single pre-specified transform so that an index to different transforms is not needed. Also, current standards do not consider side information related to previously decoded blocks during the inverse transform.

## Encoder

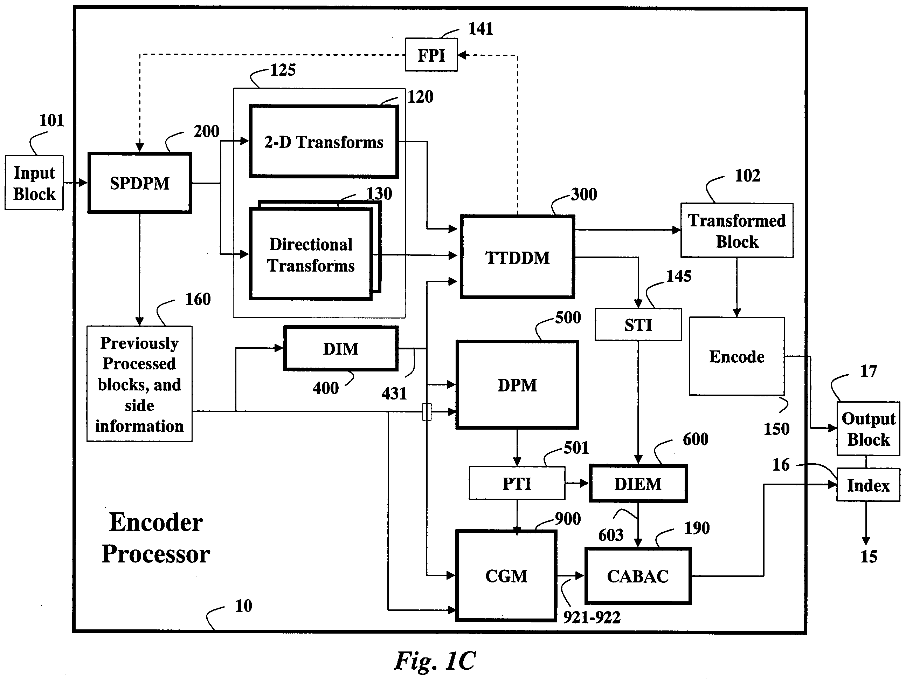

Figure 1C shows the relevant details of the encoder 10. The encoder uses directional transforms. The steps of the method as shown can be performed in a processor of an encoder. The processor includes memory and input/output interfaces as known in the art.

Input to the encoder is a block 101 of a frame of a video to be coded. As defined herein, blocks include macroblocks, sub-blocks, and block partitions, generally an array of pixels. In most coding applications, the operations are preferably performed on macroblocks and sub-blocks The block can contain original video data, residuals from a spatial or motion-compensated prediction of video data, or other texture-related data to be transformed. The block can be partitioned into sub-blocks by a sub-block partition directional processing module (SPDPM) 200. Herein, the sub-blocks are processed one at a time as "blocks."

Each block is transformed using transforms selected from a conventional two-dimensional discrete cosine transform (2-D DCT) 120, a set of directional transforms 130, or other transforms, generally transforms 125. The output of the transform is measured by a transform type and direction decision module (TTDDM) 300. The TTDDM uses a metric, such as a rate/distortion cost, to determine which of the transforms provides the best performance. The rate/distortion cost is a sum of a encoding rate and a scalar multiplied by the distortion. The transform type and direction have a minimal cost are selected for the transforming. The performance can be, but is not limited to, a measure of the coding efficiency. The idea is that the transform which has the best performance is selected for the encoding, and the selected transform is signaled to the decoder as in an index 16 in the bitstream.

The TTDDM can also receive input from a direction inference module (DIM) 400. The input to the DIM is a collection of data 160 indicating the transforms and directions used for adjacent previously processed blocks. The output of the DIM is a value or set of values corresponding to the data 160, such as preferred directions 431. The TTDDM uses this information to make the decision as to which transforms and directions are used to encode the block 101. The TTDDM can also forward a final partitioning indicator (FPI) 141 to the SPDPM as a guide for the partitioning. The TTDDM module produces the transformed block 102 and a selected transform indicator (STI) 145 representing the selected transform and direction.

Then, the transformed block 102 can be appropriately encoded 150 using entropy coding to produce an encoded output block 17.

The direction prediction module (DPM) 500 also receives information from the DIM, and information related to the previously processed blocks 160. The DPM uses this information to generate a predicted transform indicator (PTI) 501. The PTI is input to a directional index encoding module (DIEM) 600, along with the STI 145. The DIEM converts the representation to a binary codeword 603 for encoding by a context-adaptive binary arithmetic coder (CABAC) 190.

The contexts used by the CABAC are determined by a context generation module (CGM) 900. The input to the CGM is information about the transforms and directions used by adjacent previously encoded blocks from the DIM, or already coded information from the current block. The CGM produces contexts for the CABAC to encode the binary directional index. The CABAC outputs an encoded transform index 16.

## Sub-Block and Partition Directional Processing Module

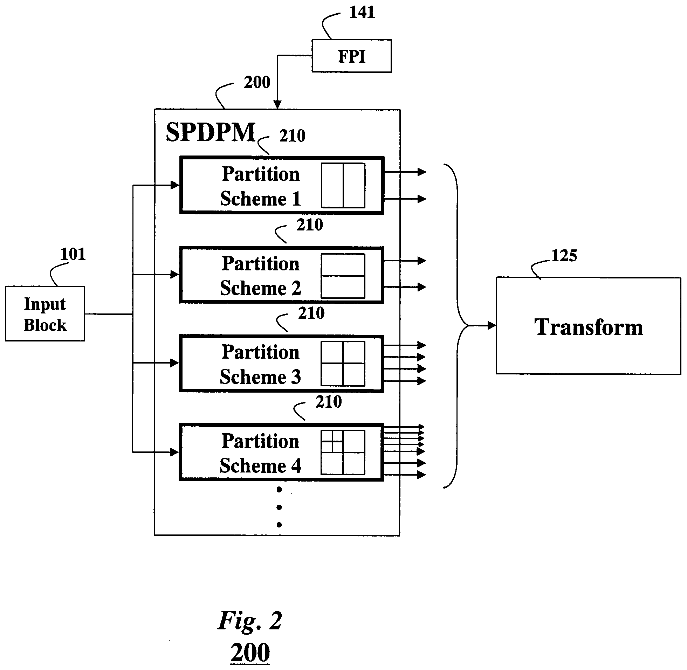

Figure 2 shows details of the SPDPM 200. The pixels in the input block 101 can represent video-related information, such as video frame data, motion-compensated prediction residuals, and spatial prediction residuals. The SPDPM partitions the block into partitions 210, generally arrays of pixels. The conventional or directional transforms 125 are applied to the partitions. The final partitioning indicator 141 produced by the TTDDM indicates which partitions to use for the best performance.

**Transform Type and Direction Decision Module**

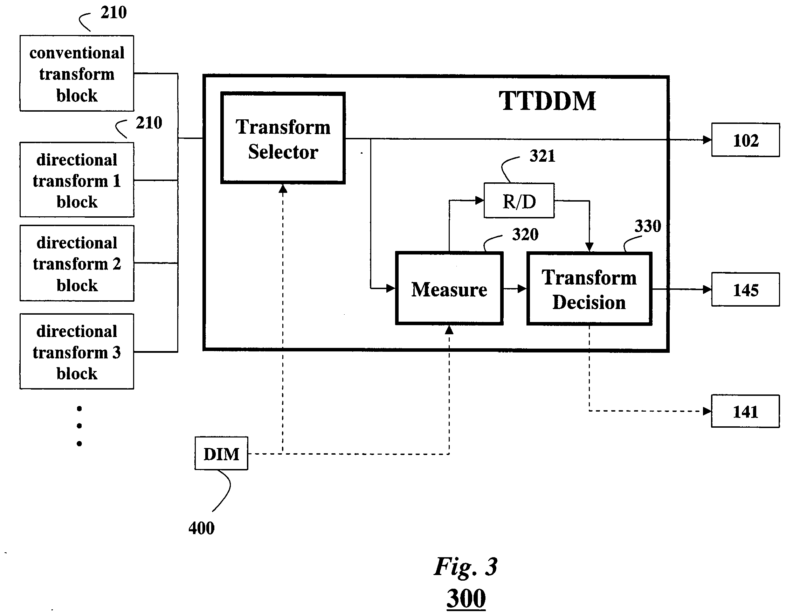

Figure 3 shows the TTDDM 300 for selecting the best transform and direction to use to transform the block 210. A transform selector 310 chooses which among available transform types are to be sent to measuring module 320, which determines a metric 321, such as the rate/distortion (R/D) cost, that is used to select transform.

The transform selector can be influenced by the DIM 400. The DIM, for example, can examine adjacent blocks to determine which directions are more likely to perform well for the current block. The measuring can then be limited to a subset of available directions, thus reducing the processing time. After these measurements are used to determine the best direction or transform, the selected transform indicator 145, and the corresponding transformed block 102 are output. If the TTDDM is operating on a selection of partitions, then the final partitioning indicator 141 that yields the best performance is also output to the SPDPM.

**Direction Inference Module**

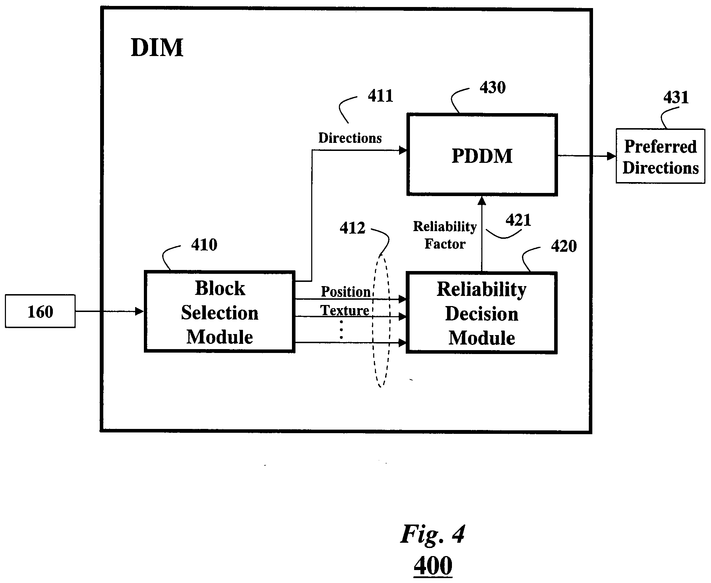

Figure 4 shows the DIM 400. The block selection module uses the previously processed blocks and side information 160 to determine possible transform directions 411 for the current block. The possible transform directions are used to determine a set of preferred directions 431. This subsequently is used by the DPM to reduce the number of bits needed to represent this information, which results in an improved efficiency in the encoder and the decoder.

A block selection module (BSM) 410 selects from the blocks 160 based on criteria, such as a distance of the selected blocks to the current block. The reliability decision module (RDM) 420 estimates the reliability of the selected blocks. The RDM module can use texture information, the position and other block data 412. A reliability factor 421 of each of the selected blocks, and the corresponding transform direction 411 are fed into the preferential direction determination module (PDDM) where the preferred directions 431 are identified.

**Directional Prediction Module**

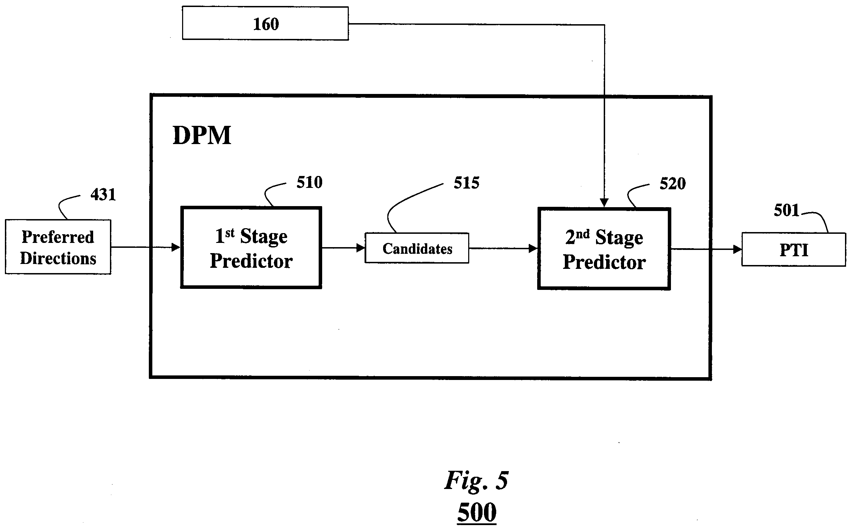

Figure 5 shows the DPM 500 to determine the predicted transform indicator 501 for the DIEM 600 and CGM. A first stage predictor 510 selects candidates 515 from the preferred directions 431. A second stage predictor 420 uses these candidates and the encoded side information 160 to select the preferred transform indicator 501.

For encoding transformed texture residuals, the selected transform direction indicator 145 can be correlated with a texture predictor, such as an intra-prediction mode used in H.264/AVC. Therefore, the side information fed to the DPM can include, for example, the intra-prediction mode to select the indicator 501.

**Directional Index Encoding Module**

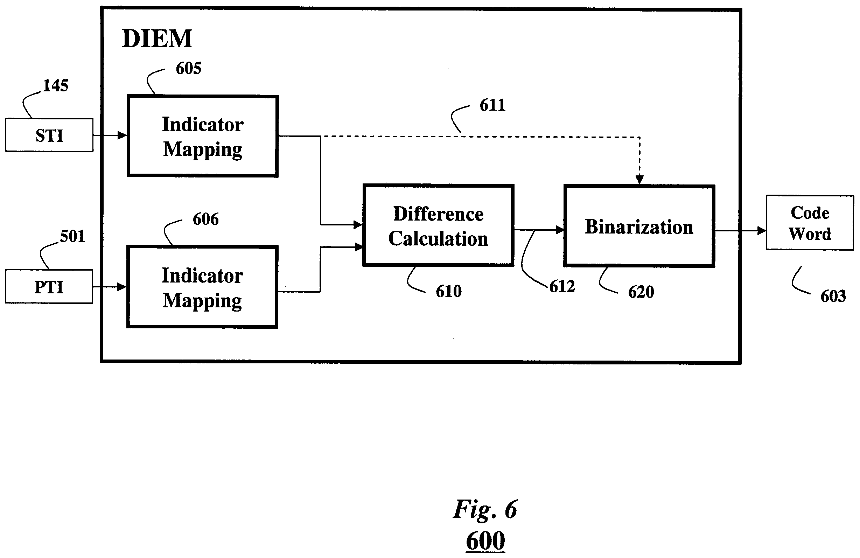

Figure 6 shows the DIEM 600. Input includes the selected transform indicator 145 and the predicted transform indicator 501, which are mapped 605-606 to a meaningful representation of the directions. Different mappings 605-606 can be used for the selected and the predicted transform indicators. A difference between the two directions is determined 610 as a transform indicator difference 612. Because the prediction is a reasonable approximation of the selected transform direction, small angle differences should result in similar code words that can be effectively encoded. The difference is binarized 620 to the code word 603, which is entropy coded by the CABAC 190 as the encoded transform index 16. It is understood that any context adaptive entropy coder can be used, as well as variable length coding (VLC). The difference calculation can be bypassed 611 as described below.

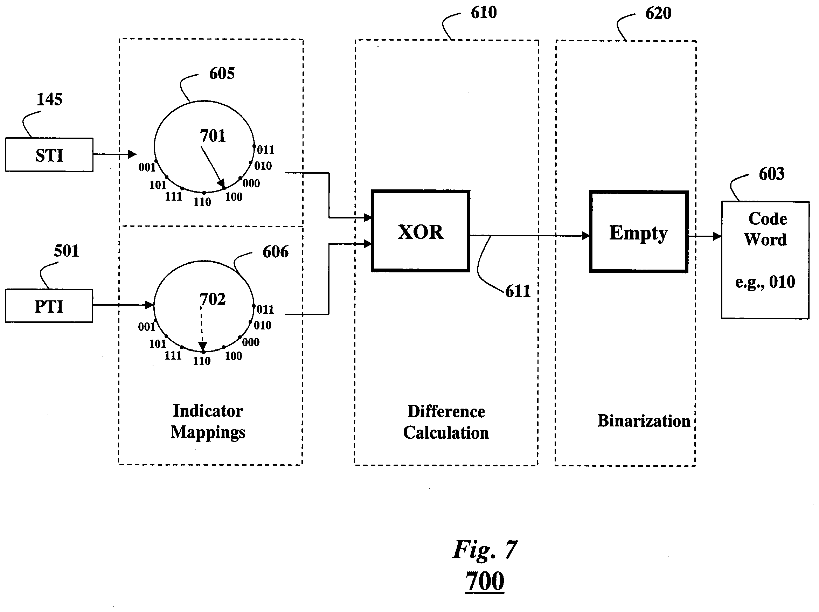

Figure 7 schematically shows a first example of the DIEM 600. For example, there are eight possible transform directions 701 and corresponding predictions 702. The transform direction is selected by the selected transform indicator 145, and the prediction is selected by the PTI 501. The transform indicators are mapped to a Gray code, in which adjacent directions differ only by one bit. The code words for the selected and the predicted directions are compared bit by bit with an exclusive-OR (XOR) 610 operation to obtain the difference 611. For a precise predictor, this yields in a bit stream with mostly zeros for a low entropy. Because the indicator mappings 605-606 use binary representations, the binarization 620 is not used.

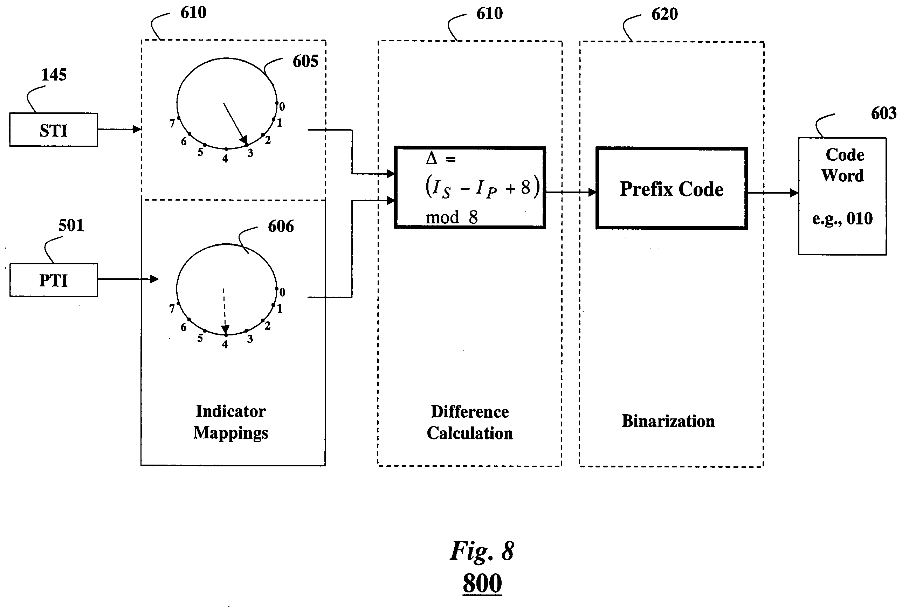

Figure 8 shows a second example of the DIEM. In this example, the directions are represented by a uniformly continuous sequence of numbers. The difference 610 is

$$ \Delta = \left( I_S - I_P + N \right) \bmod N, $$

where $I_S$ and $I_P$ are the mapped indices of the selected and predicted direction indicators, respectively, and $N$ is the number of possible direction, e.g., eight. Because small differences are more probable, the binarization 620 codes differences close to zero (0, 1, $N$-1, 2, $N$-2, ...) with fewer bits. The difference calculation can be bypassed 611 and the mapped transform indicator is forwarded directly to the binarization module 620. In this case, the context generation module 900 uses the predicted transform indicator to select an appropriate context.

## Context Generation Module

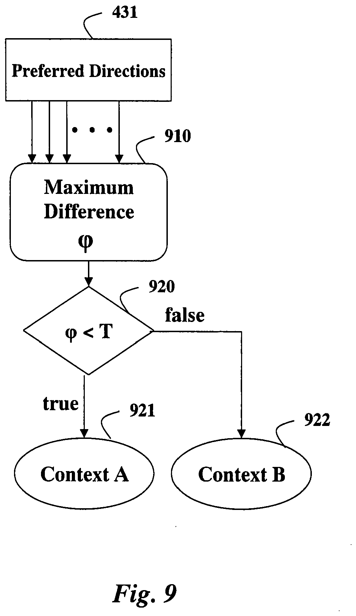

Figures 9-10 show examples of the CGM 900. The CGM selects contexts 921-922 for the CABAC 190. More than two contexts can also be selected. To determine the contexts, the CGM can use the preferred processed block information 160, the PTI 501, and the preferred directions 431. The contexts A and B distinguish accurate predicted directions and inaccurate predictions. Figure 9 shows how the preferred directions 431 are used to determine the contexts. A maximum difference φ is determined 910 and compared 920 to a predetermined threshold *T.* If the difference is less than the threshold, then the prediction is accurate in context A 921, otherwise the context B 922 is inaccurate. For example, if the DIEM is used, then the bits fed to CABAC are mostly zeros, and context A is selected to fit this probability. The context selection of the CGM 900 can also consider other factors, such as bit position, to decide among more than two contexts.

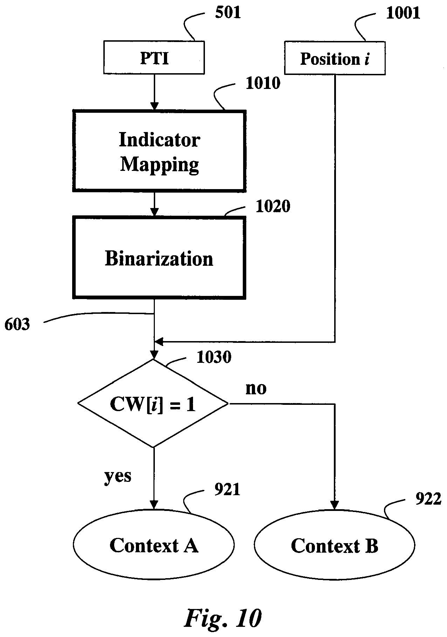

The examples shown in Figure 10 assumes that the DIEM bypasses 611 the difference calculation 610. The predicted transform indicator 501 and a positional index *i* 1001 representing which bit from the index 603 is to be encoded are inputs. The PTI 501 is mapped 1010 to a binary code word with the same indicator mapping 605 used in the DIEM. Because both code words should be the same, the most probable bit of the CABAC should be the same as the current bit CW[*i*] of 1030. Thus, if the comparison 1030 indicates the current bit is 1, the context A 921, which prefers 1, is selected, otherwise the context B 922, where 0 is the preferred bit, is selected.

## Primary and Secondary Directional Transforms

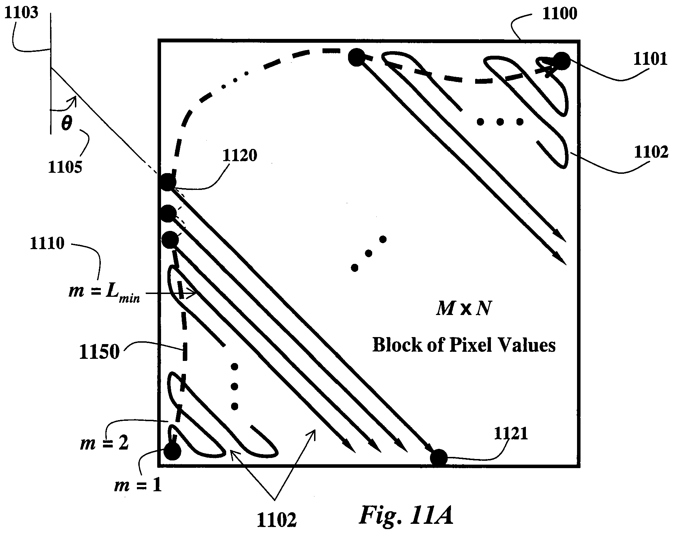

Figure 11A shows the directional transform according to embodiments of our invention. It is understood that during decoding, the transform is an *inverse* transform. The transform (or its inverse) operates on an *M* X *N* block 1100 of pixels. For the purpose of the transform, the values 1101associated with the pixels can be intensities or transform coefficients, depending on the stage of the encoding or decoding.

The transform includes a set of 1-D transforms $\{T_0, T_1, ..., T_{N-1}\}$ 1102, where *N* is the total number of 1-D transforms applied to the block. The length $l_i$ of transform $T_i$ indicates the number of pixels on which the 1-D transform operates. Thus, the transforms $\{T_0, T_1, ..., T_{N-1}\}$ in the set have corresponding lengths $\{l_0, l_1, ..., l_{N-1}\}$ .

Each transform is applied to pixels along a path 1102 in the block. A path typically includes a set of contiguous or adjacent pixels.

As shown in Figure 11B, if the values of the pixels on the path are coefficients, then the first coefficient for each path is the DC coefficient, followed by the AC coefficients. All of the first coefficients 1150 are collected in a set of secondary transform coefficients (STC) 1170.

The first secondary coefficient in the set is a secondary DC (SDC) coefficient.

During decoding, the secondary directional transform 26 can be applied to the set of secondary transform coefficients to reconstruct the DC coefficient of each path. During encoding, the first or DC coefficient of each path is discarded after the set of secondary transform coefficients 1170 is formed.

Each path is oriented, with respect to the vertical direction 1103, at a transform angle *θ* 1105, which is determined by the directional transform index. As described above, the transform index, which is determined during the encoding, is part of the bitstream to be decoded.

The paths for a particular block and transform are generally oriented in the same direction. The paths are generated as follows.

A minimum path of transform length $L_{min}$ 1110 is specified for the block. The transform path typically begins at a starting pixel 1120 located at an edge (or corner) of the block 1100. As stated above, if the values for the pixels are coefficients, the value for the starting pixel is the DC coefficient.

The path continues along the angle *θ* until an end pixel 1121 at another edges. The path length, in pixels, is *m*. If the starting pixel is at an edge or corner, then the length *m* = 1.

If $m \geq L_{min}$, then the path is considered complete. If the block still contains any pixels not on a path, then a new path is started. The new path can start at any untransformed pixel in the block. Typically, the next path begins at a pixel adjacent to or near the beginning of the previous path, or, the path can start at an opposite corner of the block so that the distribution of path lengths within the block is substantially be symmetric. The process continues with Step 2 until all pixels are transformed.

If $m < L_{min}$, then the path is too short, and the process continues by including a pixel adjacent to a previously processed pixel. If there is more than one adjacent pixel, then other paths in the block are used to determine the current path. If an unprocessed pixel is available, the pixel is made part of the path, and path length *m* is incremented, and the process continues with Step 2 in the direction (180 - *θ*) until the edge of the block is reached. Thus, the direction *θ* is set to (180 - *θ*), effectively a U-turn, before continuing with Step 2.

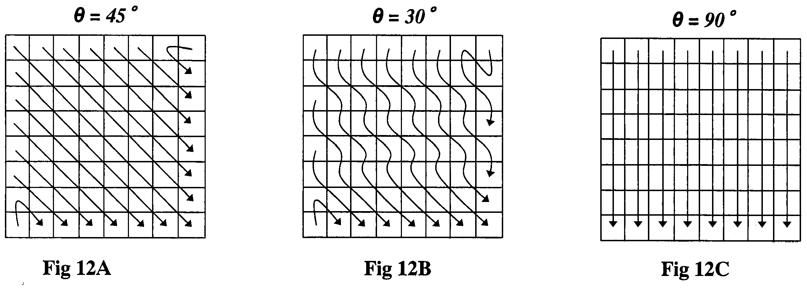

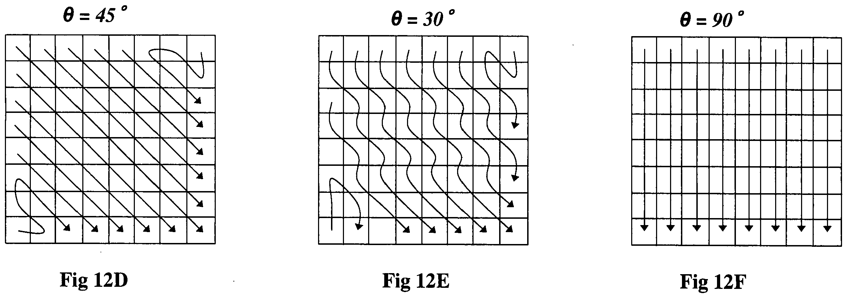

Figs. 12A-C show directional transforms for $L_{min}$ = 3 and angles of 45, 30 and 90 degrees, respectively. Figs. 12D-F show directional transforms for $L_{min}$ = 5..

The inverse transform 26 operates along the same paths as described above, except inverse-transform coefficients are used. For example, if a 1-D DCT is used for each path, then the inverse transform would use the 1-D Inverse DCT (IDCT).

## Secondary Directional Transforms

Figure 11B shows the secondary directional transform 26. After the primary directional transform has been applied, the secondary transform can be adaptively applied to each block along a path containing the initial coefficients from each path of the initial transform. These coefficients typically correspond to the DC coefficients of a 1-D transform, such as the DCT.

The inverse secondary transform operates along the same path as described above, except inverse secondary transform coefficients are used. The inverse secondary directional transform is performed before the inverse directional transform during the decoding.

The secondary transform further reduces redundancy in the DC components of the directional transform coefficients. Alternatively, the DC component of one directional transform can be used *predict* the DC component of another directional transform.

## Partitioned Directional Transforms

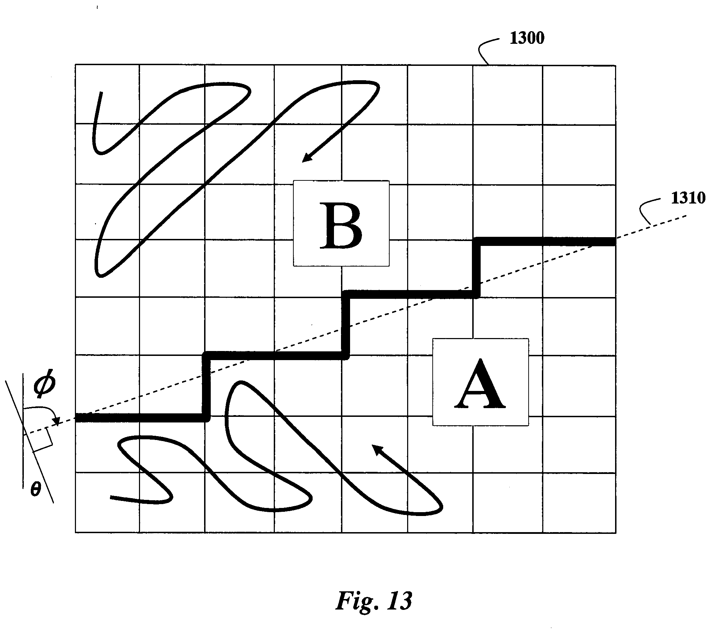

Figure 13 shows a partitioned directional transform. An $M$ x $N$ (8x8) block 1300 of pixels is partitioned into two block partitions **A** and **B** approximately along a line 1310 with a partition angel $\varphi$ with respect to vertical. The partition angle is perpendicular to the transform angle $\theta$ 1105.

Then, directional transforms are generated using the steps described above, with the constraint that block partition **A** has a set of paths oriented at angle $\theta_A$, and partition **B** has a set if paths oriented at angle $\theta_B$. The primary angle of the directional transform $\theta$ is considered to be the same as $\theta_A$. As a path is generated within the partition, the line 1310 approximates the edge of the partition. Thus, each pixel in the directional transform is either in partition **A** or **B**. The angles $\theta_A$ and $\theta_B$ can be different.

In one example, the secondary directional transform is applied to both partitions **B**. To invert the process, the secondary inverse transform is applied, and then the inverse directional transforms are applied independently to the partitions **A** and **B**. In another example, the secondary transform is applied independently to each partition.

That is, either both inverse secondary transforms can be applied before the inverse primary transforms, or the inverse secondary transform and inverse primary transform can be applied to the partitions independently. This decision is made adaptively on a per block basis.

## Scaling and Quantization Order

After the primary and secondary transforms are completed, the resulting coefficients are scaled, ordered and quantized.

The scaling of the transform coefficients depend upon the length $m$ of the path of each 1-D directional transform, or a location of the coefficient in the block. A 1-D transform of length $m$ has a scale factor $S_m$. Thus, all coefficients in the path of length $m$ are scaled, by $S_m$.

Typically, the scale factor is selected so the magnitudes of the DC coefficients are the same when transforming identical pixel values. If a transform with length $m = 4$ transforms four pixels each with value $v$, and a transform with length $m = 5$ transforms five pixels each with value $v$, then the scale factor $S_m$ is selected so that both transforms output the first (DC) coefficients with the same value.

Alternative scaling methods are also possible. Shorter transforms can be given smaller or larger scale factors based on the length $m$, or direction $\theta$. The scaling can also be made part of the transform itself, to simplify the implementation of this process.

The scaled coefficients are arranged in a scanning order. In one example, the set of transforms $\{T_0, T_1, ..., T_{N-1}\}$ is scanned independently and in order. In each transform, the first DC coefficient is scanned first, followed by the following AC coefficients in the same order as the path for that transform.

In another example, all the first DC coefficients from each transform are scanned, followed by all the second coefficients from each transform, and so on, to the last transform. In the second example, the order in which the transforms are scanned can vary. For example, the transforms can be scanned in order of their index, i.e., the first scan uses the DC coefficients from the set of transforms $\{T_0, T_1, ..., T_{N-1}\}$ in the order $\{0, 1, ..., N-1\}$. Alternatively, the transforms can be scanned in order of their length $\{l_0, l_1, ..., l_{N-1}\}$, The coefficients can be scanned based on their relative position in the block. For example, all the coefficients along an edge of the block can be scanned first, followed by coefficients that are offset from the edge.

## Claims

1.  A method for decoding a bitstream (15), wherein the bitstream corresponds to an encoded video (1), wherein the encoded video (1) includes a sequence of frames, wherein each frame is partitioned into encoded blocks, for each encoded block **characterized by** comprising the steps of:

    determining a set of paths in the block, wherein each path is at a transform angle (1105) determined from a transform index in the bitstream (15) and has a path length m, a minimum path of transform length $L_{min} > 2$ being specified for the block;
    obtaining transform coefficients (192) from the bitstream (15), wherein the transform coefficients include a one-dimensional vector of transformed DC coefficients wherein a length of the vector varies according to the transform angle, and a plurality of AC coefficients, each associated with a particular path within the block, applying a secondary inverse transform only to the one-dimensional vector of transformed DC coefficients to yield a plurality of DC coefficients, each corresponding to the particular path within the block; and

applying a primary inverse transform (25) to the transform coefficients on each completed path, comprising the DC coefficient and associated AC coefficients associated with said path, to produce a decoded video (2), wherein the steps are performed in a decoder (20),

wherein the path is generated by starting at an untransformed starting pixel in the block and by repeatedly including adjacent pixels in a direction corresponding to said transform angle and making a U-turn when the edge of the block is reached until the path is reconstructed and considered to be complete when the path length m, corresponding to the number of pixels in the path, is equal or greater than $L_{min}$, $m \geq L_{min}$ and when the path ends at an edge of the block, which ensure that the number of coefficients which are simultaneously transformed at the decoder is above a minimum.

**2.** The method of claim 1, wherein each path has a first coefficient (1150) to form a set of first coefficients, and wherein the obtaining further comprises:
predicting the DC component for each path from the set of first coefficients (1150).

**3.** The method of claim 1, wherein the primary inverse transform (25) is based on an inverse discrete cosine transform.

**4.** The method of claim 1, further comprising:
partitioning the block into a set of partitions according to a partition angle.

**5.** The method of claim 4, wherein the partition angle is perpendicular to the transform angle (1105).

**6.** The method of claim 1, wherein the blocks include macroblocks, sub-blocks, block partitions, or an array of pixels.

**7.** The method of claim 1, further comprising:

quantizing inversely the transform coefficients according to a quantization parameter; and
scaling the transform coefficients according to a location of the transform coefficients in the block.

**8.** The method of claim 1, further comprising:

quantizing inversely the transform coefficients according to a quantization parameter; and
scaling the transform coefficients according to the lengths.

**Patentansprüche**

**1.** Verfahren zum Dekodieren eines Bitstroms (15), wobei der Bitstrom einem kodierten Video (1) entspricht, wobei das kodierte Video (1) eine Abfolge von Rahmen beinhaltet, wobei jeder Rahmen in kodierte Blöcke partitioniert ist, das für jeden Block **dadurch gekennzeichnet ist, dass** es die folgenden Schritte umfasst:

Bestimmen eines Satzes von Pfaden im Block, wobei jeder Pfad mit einem Transformationswinkel (1105) aus einem Transformationsindex im Bitstrom (15) bestimmt wird und eine Pfadlänge m aufweist, wobei ein minimaler Pfad der Transformationslänge $L_{min} > 2$ für den Block spezifiziert wird;
Erhalten von Transformationskoeffizienten (192) aus dem Bitstrom (15), wobei die Transformationskoeffizienten einen eindimensionalen Vektor transformierter DC-Koeffizienten, wobei eine Länge des Vektors entsprechend dem Transformationswinkel variiert, und eine Vielzahl von AC-Koeffizienten beinhalten, von denen jeder einem bestimmten Pfad innerhalb des Blocks zugeordnet ist,
Anwenden einer sekundären inversen Transformation nur auf den eindimensionalen Vektor transformierter DC-Koeffizienten, um eine Vielzahl von DC-Koeffizienten zu ergeben, von denen jeder dem bestimmten Pfad innerhalb des Blocks entspricht; und
Anwenden einer primären inversen Transformation (25) auf die Transformationskoeffizienten in jedem vervollständigten Pfad, umfassend den DC-Koeffizient und zugeordneten AC-Koeffizienten, die dem Pfad zugeordnet sind, um ein dekodiertes Video (2) zu erzeugen, wobei die Schritte in einem Dekodierer (20) durchgeführt werden,
wobei der Pfad erzeugt wird, indem bei einem nicht transformierten Anfangspixel im Block begonnen wird und indem wiederholt benachbarte Pixel in einer Richtung einbezogen werden, die dem Transformationswinkel entspricht, und eine Kehrtwende ausgeführt wird, wenn der Rand des Blocks erreicht wird, bis der Pfad rekonstruiert ist und als vollständig betrachtet wird, wenn die Pfadlänge m, die der Anzahl der Pixel im Pfad entspricht, gleich oder größer als $L_{min}$, $m \geq L_{min}$ ist und wenn der Pfad an einem Rand des Blocks endet, wodurch sichergestellt wird, dass die Anzahl der Koeffizienten, die im Dekodierer gleichzeitig transformiert werden, über einem Minimum liegt.

**2.** Verfahren nach Anspruch 1, wobei jeder Pfad einen ersten Koeffizienten (1150) zur Bildung eines Satzes erster Koeffizienten hat und wobei das Erhalten ferner Folgendes umfasst:

Vorhersagen der DC-Komponente für jeden Pfad aus dem Satz erster Koeffizienten (1150).

**3.** Verfahren nach Anspruch 1, wobei die primäre inverse Transformation (25) auf einer inversen diskreten Kosinustransformation beruht.

**4.** Verfahren nach Anspruch 1, ferner umfassend:
Partitionieren des Blocks in einen Satz von Partitionen entsprechend einem Partitionswinkel.

**5.** Verfahren nach Anspruch 4, wobei der Partitionswinkel senkrecht zum Transformationswinkel (1105) verläuft.

**6.** Verfahren nach Anspruch 1, wobei die Blöcke Makroblöcke, Teilblöcke, Blockpartitionen oder eine Anordnung von Pixeln umfassen.

**7.** Verfahren nach Anspruch 1, ferner umfassend:

inverses Quantifizieren der Transformationskoeffizienten entsprechend einem Quantifizierungsparameter; und
Skalieren der Transformationskoeffizienten entsprechend einem Ort der Transformationskoeffizienten im Block.

**8.** Verfahren nach Anspruch 1, ferner umfassend:

inverses Quantifizieren der Transformationskoeffizienten entsprechend einem Quantifizierungsparameter; und
Skalieren der Transformationskoeffizienten entsprechend der Längen.

**Revendications**

**1.** Procédé de décodage d'un train de bits (15), dans lequel le train de bits correspond à une vidéo codée (1), dans lequel la vidéo codée (1) comprend une séquence de trames, dans lequel chaque trame est partitionnée en des blocs codés, **caractérisé en ce que** le procédé comprend, pour chaque bloc codé, les étapes ci-dessous consistant à :

déterminer un ensemble de chemins dans le bloc, dans lequel chaque chemin est à un angle de transformée (1105) déterminé à partir d'un indice de transformée dans le train de bits (15), et présente une longueur de chemin « m », un chemin minimum de longueur de transformée $L_{min} > 2$ étant spécifié pour le bloc ;

obtenir des coefficients de transformée (192) à partir du train de bits (15), dans lequel les coefficients de transformée incluent un vecteur unidimensionnel de coefficients de courant continu, DC, transformés, dans lequel une longueur du vecteur varie en fonction de l'angle de transformée, et une pluralité de coefficients de courant alternatif, AC, qui sont chacun associés à un chemin particulier au sein du bloc ;
appliquer une transformée inverse secondaire uniquement au vecteur unidimensionnel de coefficients de courant continu transformés, en vue d'obtenir une pluralité de coefficients de courant continu correspondant chacun au chemin particulier au sein du bloc ; et
appliquer une transformée inverse primaire (25) aux coefficients de transformée sur chaque chemin complété, comprenant le coefficient de courant continu et des coefficients de courant alternatif associés audit chemin, en vue de produire une vidéo décodée (2), dans lequel les étapes sont mises en oeuvre dans un décodeur (20) ;
dans lequel le chemin est généré en commençant au niveau d'un pixel de départ non transformé dans le bloc, en incluant de manière répétée des pixels adjacents dans une direction correspondant audit angle de transformée et en effectuant un demi-tour lorsque le bord du bloc est atteint jusqu'à ce que le chemin soit reconstruit et considéré comme complet lorsque la longueur de chemin « m », correspondant au nombre de pixels dans le chemin, est égale ou supérieure à $L_{min}$, où $m \geq L_{min}$, et lorsque le chemin se termine au niveau d'un bord du bloc, ce qui garantit que le nombre de coefficients qui sont simultanément transformés au niveau du décodeur est supérieur à un minimum.

**2.** Procédé selon la revendication 1, dans lequel chaque chemin présente un premier coefficient (1150) pour former un ensemble de premiers coefficients, et dans lequel l'étape d'obtention comprend en outre l'étape ci-dessous consistant à :
prédire la composante de courant continu pour chaque chemin à partir de l'ensemble de premiers coefficients (1150).

**3.** Procédé selon la revendication 1, dans laquelle la transformée inverse primaire (25) est basée sur une transformée en cosinus discrète inverse.

**4.** Procédé selon la revendication 1, comprenant en outre :
partitionner le bloc en un ensemble de partitions selon un angle de partition.

**5.** Procédé selon la revendication 4, dans lequel l'angle de partition est perpendiculaire à l'angle de transformée (1105).

6. Procédé selon la revendication 1, dans lequel les blocs incluent des macroblocs, des sous-blocs, des partitions de blocs, ou un réseau de pixels.

7. Procédé selon la revendication 1, comprenant en outre :

effectuer une quantification inverse des coefficients de transformée selon un paramètre de quantification ; et
mettre à l'échelle les coefficients de transformée selon un emplacement des coefficients de transformée dans le bloc.

8. Procédé selon la revendication 1, comprenant en outre :

effectuer une quantification inverse des coefficients de transformée selon un paramètre de quantification ; et
mettre à l'échelle les coefficients de transformée selon les longueurs.

*Fig. 1A*

EP 2 491 716 B1

*Fig. 1B*

*Fig. 1C*

*Fig. 2*

**200**

**Fig. 3**
**300**

**Fig. 4**
**400**

*Fig. 5*

**500**

*Fig. 6*
**600**

*Fig. 7*

**700**

**Fig. 8**

**800**

EP 2 491 716 B1

EP 2 491 716 B1

431

Preferred Directions

• • •

910

Maximum
Difference
$\varphi$

920

$\varphi < T$

false

true

921

922

Context A

Context B

*Fig. 9*

*Fig. 10*

*Fig. 11A*

Fig. 11B

$\theta = 90°$

Fig 12C

$\theta = 30°$

Fig 12B

$\theta = 45°$

Fig 12A

$\theta = 90°$

Fig 12F

$\theta = 30°$

Fig 12E

$\theta = 45°$

Fig 12D

*Fig. 13*

EP 2 491 716 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Direction-adaptive partitioned block transform for image coding. **CHUO-LING CHANG.** Image Processing 2008. 15th IEEE International Conference, 2008, 145-148